# EUROPÄISCHE PATENTSCHRIFT

(11) **EP 1 256 474 B1**
(45) Veröffentlichungstag und Bekanntmachung des Hinweises auf die Patenterteilung: **05.07.2006**
(21) Anmeldenummer: 02009922.2
(22) Anmeldetag: 03.05.2002
(51) Int. Cl.: B60J 7/14, B60J 7/12

(54) **Cabriolet-Fahrzeug mit einem zumindest bereichsweise flexiblen Dach**
Convertible vehicle with a at least locally flexible roof
Véhicule convertible avec un toit ayant au moins des regions flexible locales

(30) Priorität: 12.05.2001 DE 10123227
(43) Veröffentlichungstag der Anmeldung: 13.11.2002
(73) Patentinhaber: Wilhelm Karmann GmbH, 49084 Osnabrück (DE)
(72) Erfinder: Bunsmann, Winfried, 49143 Bissendorf (DE); Russke, Klaus, 49143 Bissendorf (DE)
(74) Vertreter: Ouzman, Beverley Nicola Claire

(56) Entgegenhaltungen:
- DE-A- 3 825 790
- DE-A- 19 704 846
- DE-C- 4 124 813
- DE-C- 19 852 615
- US-A- 4 708 389
- US-A- 5 207 474
- US-A- 5 833 300

## Beschreibung

Die Erfindung betrifft ein Cabriolet-Fahrzeug nach dem Oberbegriff des Anspruches 1. Ein solches Cabriolet-Fahrzeug ist zum Beispiel aus der DE-C-198 52 615 bekannt.

Um einen flexiblen Dachbereich bzw. ein vollständig flexibles Dach eines Cabriolet-Fahrzeugs abzustützen, ist es bekannt, den äußeren Dachbezug des flexiblen Dachbereichs, beispielsweise einen textilen Bezug, über fahrzeugrandseitige Rahmenabstützungen und zwischen diesen Rahmenabstützungen erstreckte Querspriegel zu spannen. Die Querspriegel dienen dabei als starre Träger des Dachbezugs und sorgen für die Spannung in dem an sich flexiblen Material, die bei geschlossenem Dach erforderlich ist.

Um das Dach zu öffnen, müssen diese Querspriegel als ganzes in rückwärtige Fahrzeugrichtung verlagert und dort abgelegt werden, wodurch ein erheblicher Raumbedarf auch des abgelegten Daches entsteht. Dieses ist mit einer deutlichen Einschränkung des Kofferraums verbunden, da immer eine Ausdehnung eines Verdeckaufnahmekastens von minimal der Erstreckung der starren Träger zur Verfügung stehen muß.

Der Erfindung liegt das Problem zugrunde, die Dachablage diesbezüglich zu verbessern.

Die Erfindung löst dieses Problem durch ein Cabriolet-Fahrzeug mit den Merkmalen des Anspruchs 1. Vorteilhafte Ausgestaltungen ergeben sich aus den abhängigen Ansprüchen 2 bis 10.

Mit der erfindungsgemäßen Ausbildung der Träger können diese in abgelegter Stellung um das oder die Gelenke eingefaltet sein, wodurch in abgelegter Stellung nicht ein Raum zur Verfügung stehen muß, der eine Ausdehnung entsprechend einer Trägerlänge bei geschlossenem Dach aufweisen müßte. Der Dachablageraum kann dadurch in seinen Breiten- und/oder Längserstreckungsmaßen verkleinert sein.

Wenn erfindungsgemäß die Träger in Längsrichtung des Fahrzeugs verlaufen, kann durch die Teilung eine verminderte Ausdehnung des Dachaufnahmeraums für das geöffnete Dach in Fahrzeuglängsrichtung erreicht werden. Der Dachaufnahmeraum ragt somit weniger oder gar nicht in den Kofferraum hinein. Besonders vorteilhaft ist eine derartige Ausbildung mit einer hinteren Sitzreihe verbunden, die bei geöffnetem Dach nach Vorverlagerung der Sitzlehnen als Dachaufnahmeraum und bei geschlossenem Dach als Sitzreihe dient. Der Dachaufnahmeraum kann dann so gestaltet sein, daß der Kofferraum des Fahrzeugs in vollem Umfang erhalten bleibt.

Weiterhin ist es besonders günstig, wenn die an Gelenken verbundenen Teile der Träger mit formschlüssigen Zentrierhilfen versehen sind. Dadurch wird im geschlossenen Zustand des Daches eine klapper- und schwingungsfreie Halterung auch des flexiblen Dachbereichs bewirkt. Die an den Gelenken geteilten Träger bilden keine zusätzlichen Geräuschquellen oder Schwächungen der Tragkonstruktion. Die Teile der Träger können derart gegeneinander vorgespannt sein, daß diese bei geschlossenem Dach auf Druck gegeneinander beansprucht sind, wodurch die Stabilität erhöht ist.

Weitere Vorteile und Einzelheiten des Gegenstandes der Erfindung ergeben sich aus einem nachfolgend beschriebenen und in der Zeichnung dargestellten Ausführungsbeispiel. In der Zeichnung zeigt:
- Fig. 1: eine schematische, perspektivische Ansicht eines erfindungsgemäßen Cabriolet-Fahrzeugs bei geschlossenem Dach,
- Fig. 2: eine ähnliche Ansicht wie Fig. 1 bei teilweise geöffnetem flexiblem Dachteil,
- Fig. 3: eine ähnliche Ansicht wie Fig. 2 während der weiteren Öffnung des flexiblen Dachteils,

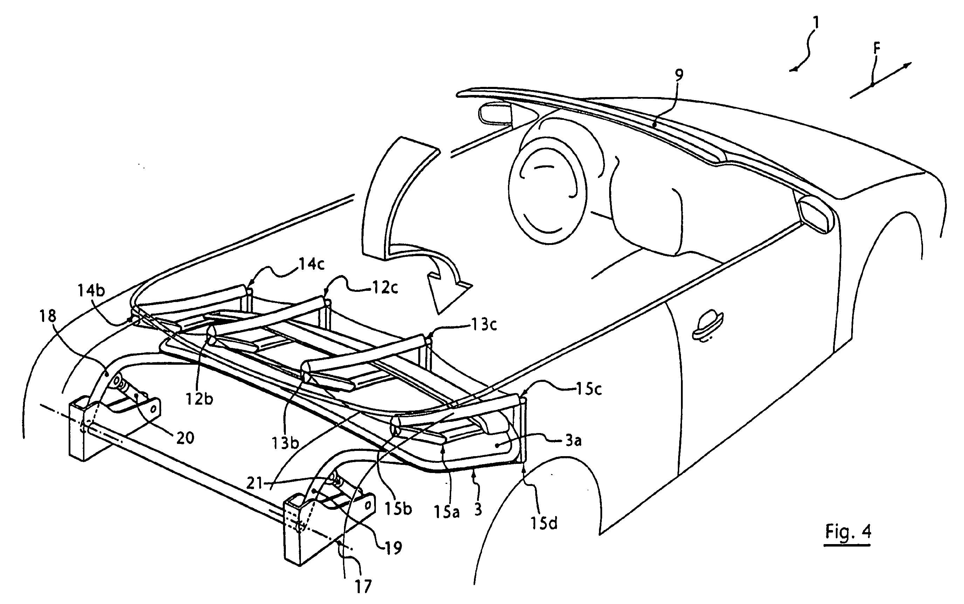

- Fig. 4: eine ähnliche Ansicht wie Fig. 3 bei vollständig geöffnetem Dach,
- Fig. 5: eine schematische Seitenansicht des Cabriolet-Fahrzeugs bei vollständig geschlossenem Dach,
- Fig. 6: eine ähnliche Ansicht wie Fig. 5 während der Öffnung des flexiblen Dachteils,
- Fig. 7: eine ähnliche Ansicht wie Fig. 6 bei vollständiger Öffnung des flexiblen Dachteils und noch geschlossener Stellung eines starren hinteren Dachteils,
- Fig. 8: eine ähnliche Ansicht wie Fig. 7 bei vollständig geöffnetem Dach,
- Fig. 9: eine Detailansicht eines Längsträgers von der Seite gesehen,
- Fig. 10: eine Draufsicht auf den Längsträger nach Fig. 9,
- Fig. 11: eine perspektivische Ansicht des Längsträgers in seinem Gelenkbereich,
- Fig. 12: eine Seitenansicht des Längsträgers bei aufgeschwenkter Stellung der Teile gegeneinander,
- Fig. 13: eine Seitenansicht der gegeneinander aufgeschwenkten Teile des Längsträgers,
- Fig. 14: einen Schnitt entlang der Linie XIV-XIV in Fig. 10,
- Fig. 15: einen Schnitt entlang der Linie XV-XV in Fig. 10,
- Fig. 16: einen Schnitt entlang der Linie XVI-XVI in Fig. 9.

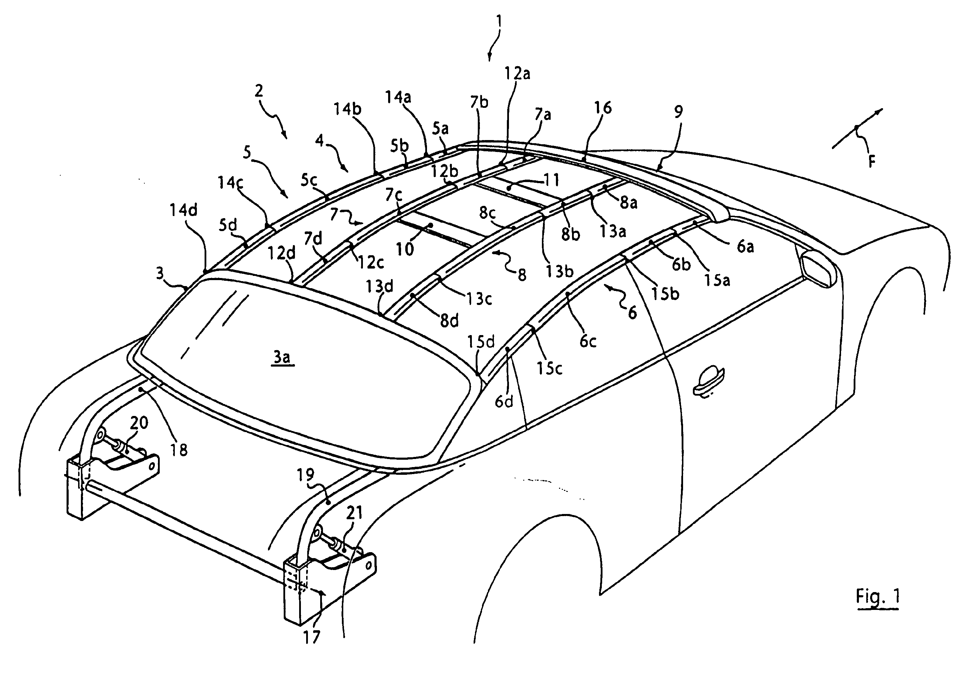

Das in Fig. 1 dargestellte Cabriolet-Fahrzeug 1 weist ein insgesamt bewegliches Dach 2 auf, das ein starres hinteres Dachteil 3 und ein daran in Fahrtrichtung F anschließendes flexibles Dachteil 4 umfaßt.

Abweichend von der gezeichneten Ausführung, kann auch das Dach 2 insgesamt flexibel ausgebildet sein. In jedem Fall kann das Dach 2 von einem einheitlichen Bezug (nicht gezeichnet) übergriffen sein, um damit eine einheitliche Optik sicherzustellen.

Im vorliegenden Ausführungsbeispiel ist das Cabrioletfahrzeug 1 mit einer rückwärtigen Sitzreihe ausgestattet, was grundsätzlich nicht zwingend ist. Ein erfindungsgemäßes Cabriolet-Fahrzeug kann auch ein Zweisitzer sein.

Der Dachbezug des flexiblen Dachbereichs 4 ist zwischen fahrzeugrandseitigen Rahmenabstützungen 5,6 und über Träger 7,8 gespannt. Im gezeichneten Ausführungsbeispiel sind die Träger 7,8 in Fahrzeuglängsrichtung angeordnet und verbinden das starre hintere Dachteil 3 mit einem oberen Bereich des vorderen Windschutzscheibenrahmens 9. An Stelle der zwei in Fig. 1 gezeichneten Träger 7,8 neben den randseitigen Rahmenabstützungen 5,6 kann auch eine andere Anzahl von zusätzlichen Trägern 7,8 vorgesehen sein. Insbesondere kann auch ein längs erstreckter Träger in der vertikalen Fahrzeuglängsmittelebene liegen.

Im Ausführungsbeispiel sind Querverbinder 10,11 zwischen den Längsträgern 7,8 vorgesehen. Dieses ist allerdings nicht zwingend. Andererseits können auch derartige Querverbinder zwischen den Längsträgern 7,8 und den randseitigen Rahmenabstützungen 5,6 vorgesehen sein. Die Querträger 10,11 verlaufen dicht unterhalb der oberen Seite der Längsträger 7,8, wodurch sie sich im aufgespannten Bezug nicht abzeichnen.

Die längs verlaufenden Träger 7,8 und die randseitigen Rahmenprofile 5,6 sind über einen frontseitigen Querträger 16, der zur Anlage an den Windschutzscheibenrahmen 9 dient, miteinander verbunden.

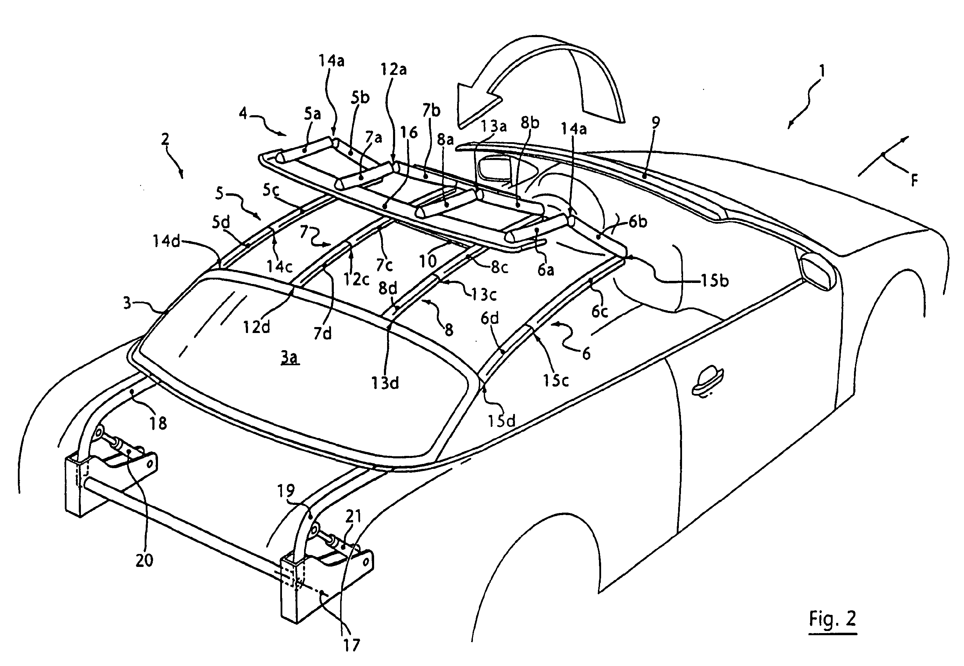

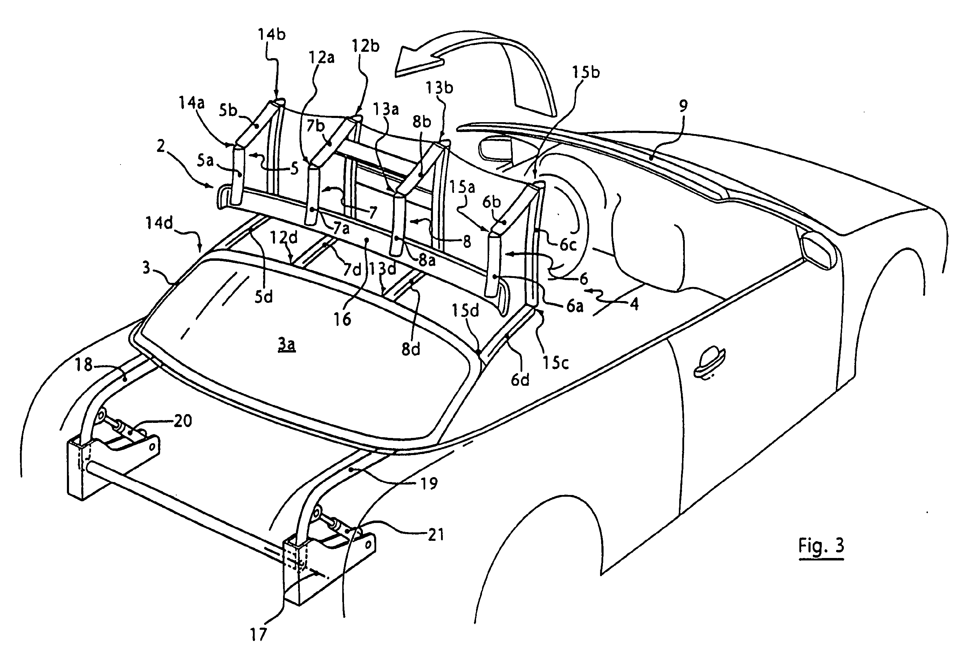

Die längs verlaufenden Träger 7,8 sind durch im Ausführungsbeispiel jeweils drei Gelenke 12a,12b,12c bzw. 13a,13b,13c in ihrem Längsverlauf in vier Abschnitte 7a,7b,7c,7d;8a,8b,8c,8d geteilt. Auch die äußeren Rahmenabstützungen 5;6 sind in entsprechender Weise jeweils mit drei Gelenken 14a,14b,14c bzw. 15a,15b,15c über ihren Längsverlauf versehen und in die entsprechenden Abschnitte 5a,5b,5c,5d;6a,6b,6c,6d geteilt. Der flexible Dachbereich ist um diese Gelenke faltbar, wie in den Fig. 2 und 3 dargestellt ist. Auch eine andere Anzahl von Gelenken ist möglich.

Die Lage der jeweils einander zugeordneten Gelenke 12a,13a,14a bzw. 12b,13b,14b,12c,13c,14c der jeweiligen Träger 7,8 bzw. Rahmenabstützungen 5,6 ist dabei so aufeinander abgestimmt, daß mit einer Faltungsbewegung jeweils alle einander zugeordneten Gelenke 12a,13a,14a,15a bzw. 12b,13b, 14b,15b bzw. 12c,13c,14c,15c gleichzeitig eingefaltet werden können. Dies bedeutet nicht, daß die jeweils nebeneinanderliegenden Gelenke, beispielsweise 12a,13a,14a,15a alle auf einer gemeinsamen Querlinie im Fahrzeug liegen. Vielmehr ist die Lage der einander zugeordneten Gelenke durch die Wölbung und den Bewegungsablauf des Dachöffnens und -schließens aufeinander abgestimmt.

Das starre hintere Dachteil 3 mit der Heckscheibe 3a ist über eine karosserieseitige, quer verlaufende Horizontalschwenkachse 17 schwenkbar gehalten. Die Horizontalschwenkachse 17 liegt dabei in geschlossener Stellung des Daches 2 (Fig. 1) unterhalb und deutlich heckwärts des hinteren Dachteils 3. Die Schwenkachse 17 ist über zwei seitliche Ausleger 18,19, die als Schwenkarme dienen und starr an dem hinteren Dachteil 3 festgelegt sind, mit diesem verbunden. Die Ausleger 18,19 sind dabei den Fahrzeugaußenseiten zugeordnet und beispielsweise über Hydraulikzylinder oder andere Antriebsorgane 20,21 betätigbar. Auch eine rein manuelle Betätigung oder eine Unterstützung durch Gasdruckzylinder in der manuellen Betätigung ist möglich. Durch die seitliche Lage der Ausleger 18,19 können diese etwa hinter Verkleidungen angeordnet sein und daher das Kofferraumvolumen uneingeschränkt lassen.

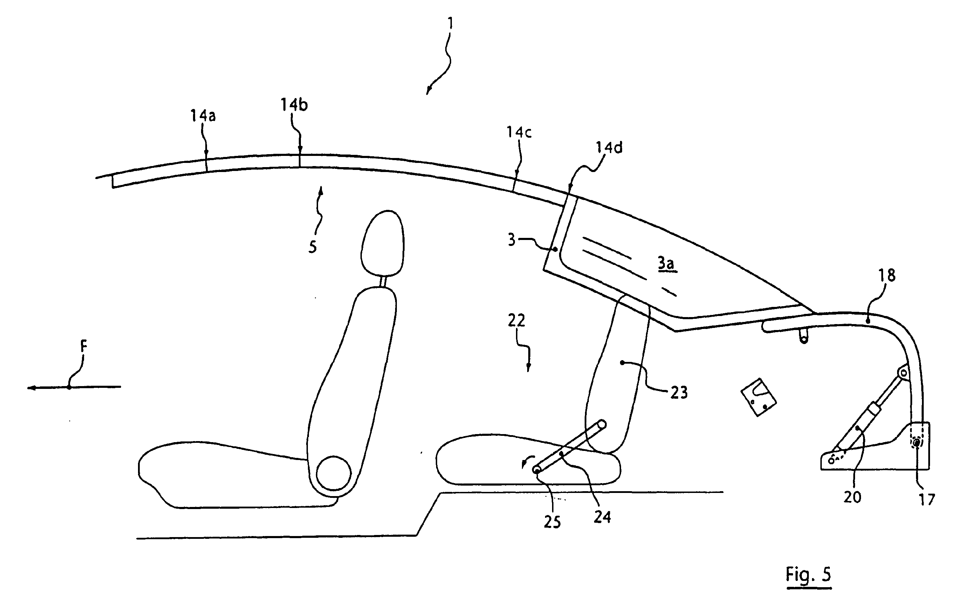

Das im Ausführungsbeispiel dargestellte Cabriolet-Fahrzeug 1 umfaßt des weiteren eine hintere Sitzreihe 22, deren Sitzlehnen 23 aus der hinteren Extremalstellung (Fig. 5) in Fahrtrichtung F verlagerbar sind. Hierzu dient beispielsweise ein Schwenkarm 24, der um ein karosseriefestes Gelenk 25 schwenkbar ist und dabei die Sitzlehne 23 nach vorne verlagert. Auch eine Kulissenführung oder dergleichen ist möglich. Die hintere Extremalstellung der Sitzlehnen 23 stellt die übliche Gebrauchsstellung der hinteren Sitzreihe 22 dar.

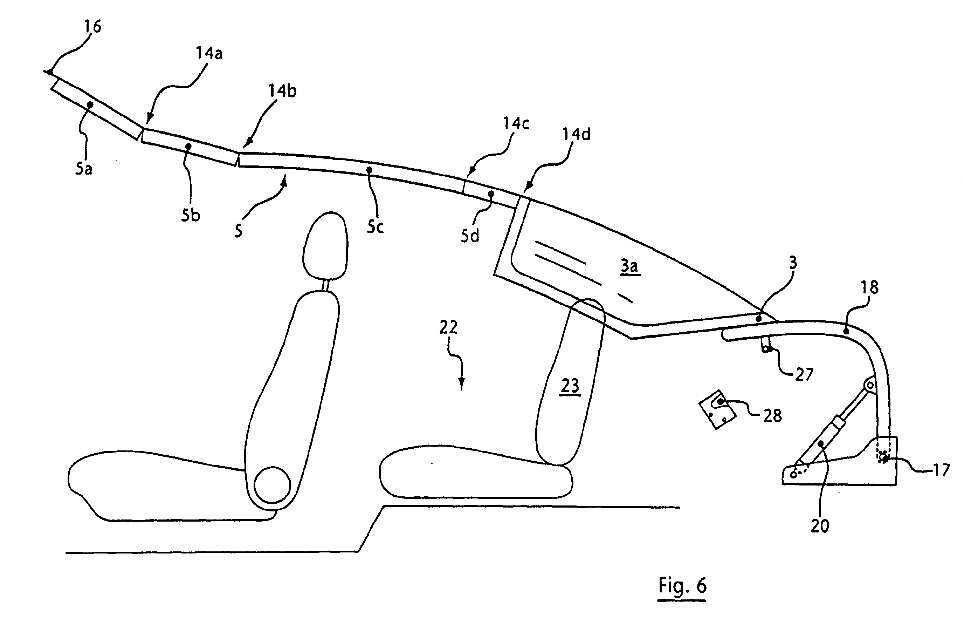

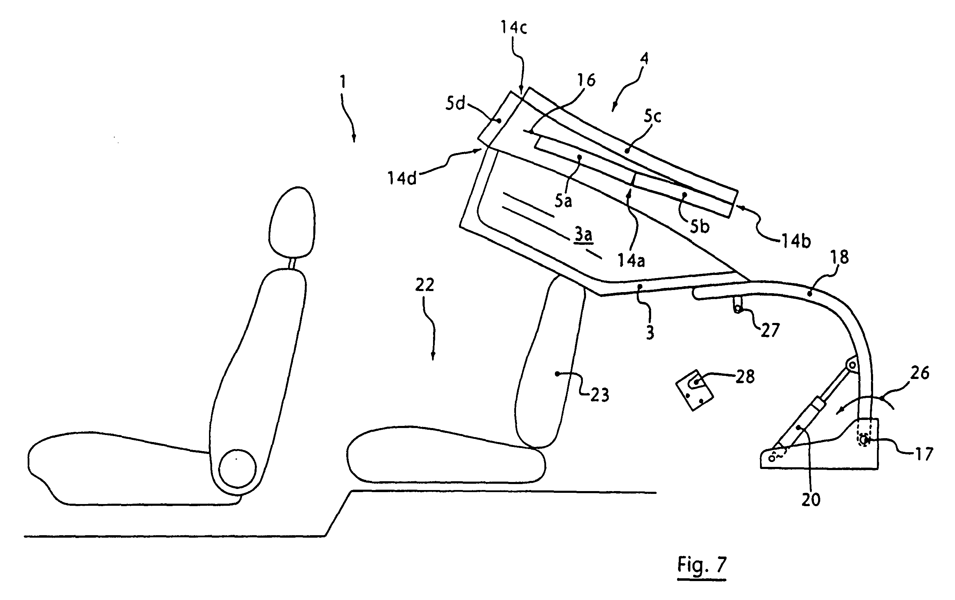

Zum Öffnen des Daches 2 wird zunächst der vordere Querträger 16 vom Windschutzscheibenrahmen 9 abgehoben. Dabei werden die Gelenke 12a,13a,14a,15a;12b,13b,14b,15b eingeknickt, so daß die dort vorher auf Stoß aneinanderliegenden Abschnitte 5a,5b,5c bzw. 6a,6b,6c der seitlichen Rahmenabstützungen 5,6 sowie 7a,7b,7c und 8a,8b,8c der Längsträger 7,8 gegeneinander abgewinkelt werden (Fig. 6). Die Abschnitte 5a,5b,6a,6b,7a,7b,8a,8b werden dann um nahezu 180° nach hinten aufgeschwenkt und auf den Abschnitten 5c,6c,7c,8c abgelegt (Fig. 2). Im weiteren wird zunächst das Gelenk 12c,13c,14c,15c eingeknickt, so daß die Bereiche 5c,6c,7c,8c über Durchschreiten einer vertikalen Stellung (Fig. 3) nach hinten abgelegt werden können, wobei die auf den Bereichen 5c,6c,7c,8c liegenden vorderen Abschnitte 5a,5b,6a,6b,7a,7b,8a,8b in einer Parallelstellung zu den Abschnitten 5c,6c,7c,8c verbleiben. Gleichzeitig wird schließlich auch das Gelenk 12d,13d,14d,15d eingeknickt, wodurch insgesamt nach Art eines Rolldaches der flexible Bereich 4 auf dem starren Dachteil 3 abgelegt wird (Fig. 7). Der Abschnitt 5d,6d,7d,8d steht dabei nahezu vertikal, während die anderen Abschnitte im wesentlichen parallel auf der Heckscheibe 3a aufliegen.

Durch Schwenkbewegung in Richtung des Pfeils 26 (Einziehen der Hydraulikzylinder 20,21 oder manueller Druck gegen die Kraft entsprechend angeordneter Gaszylinder) wird dann das hintere starre Dachteil 3 um die horizontale Schwenkachse 17 abwärtsverschwenkt, wobei wegen des großen Hebelarms um die Schwenkachse 17 nur eine geringe Kraft für ein hinreichendes Drehmoment sowohl beim Absenken als auch beim Anheben des starren Dachteils 3 mit dem darauf liegenden flexiblen Dachteil 4 aufgebracht werden muß.

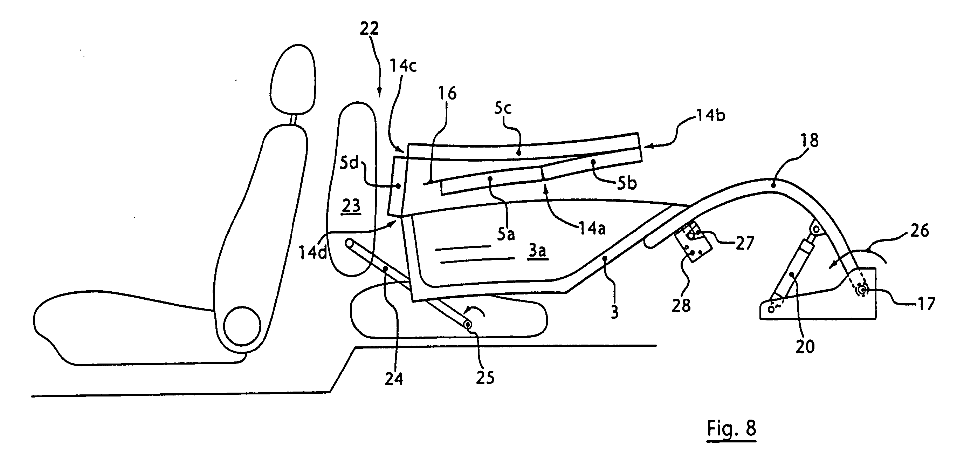

Um Raum für die Ablage des Daches 2 zu schaffen, wird zunächst die Lehne 23 der hinteren Sitzreihe 22 aus der hinteren Extremalstellung (Fig. 7) in die vordere Extremalstellung (Fig. 8) verlagert, so daß der Bereich 22 der hinteren Sitzreihe als Ablageraum für das geöffnete Dach 2 genutzt werden kann.

In Offenstellung (Fig. 8) ist das Dach über an den Auslegern 18,19 angeordnete Achsstummel 27 in Schlössern 28 verriegelbar.

Die Dachöffnung kann, um eine insgesamt kostengünstige Lösung zu erreichen, vollständig manuell erfolgen. Auch eine teilweise manuelle Öffnung, etwa des flexiblen Bereiches 4, und eine mechanisch unterstützte bzw. angetriebene Öffnung des starren Heckbereichs 3 des Daches 2 ist möglich.

Durch die heckseitige und abwärtsverlagerte Schwenkachse 17 sowie die seitlichen Ausleger 18,19 bleibt das Kofferraumvolumen nahezu vollständig erhalten. In Offenstellung ist die Heckscheibe 3a nahezu horizontal gehalten, so daß auch darunter noch Raum zur Aufnahme von Gepäckstücken verbleibt. Somit ist insgesamt eine bezüglich des Kofferraums sehr platzsparende und gleichzeitig preisgünstige Lösung für ein Cabriolet-Fahrzeug geschaffen.

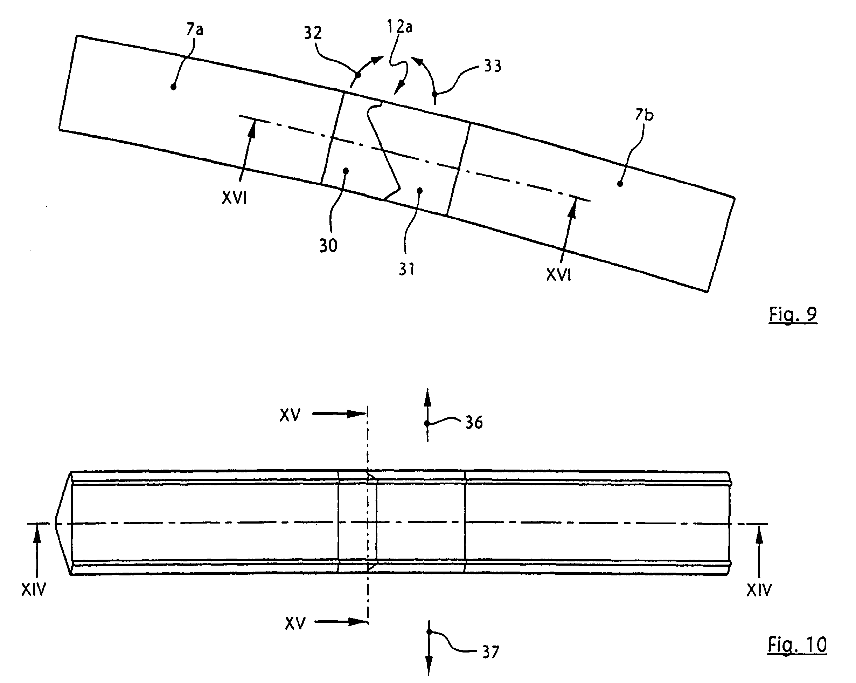

Die Längsträger 7,8 können wie die Seitenträger 5,6 beispielsweise aus einem Kunststoff, insbesondere einem mechanisch hochbelastbaren Kunststoff, wie etwa einem Duroplasten, etwa Polyurethan, bestehen. Die Träger 7,8 sowie die seitlichen Rahmenabstützungen 5,6 sind dabei im wesentlichen gleichartig ausgebildet und umfassen jeweils ein massives Profil, beispielsweise ein Dreiecksprofil (sh. Fig. 9, Fig. 10).

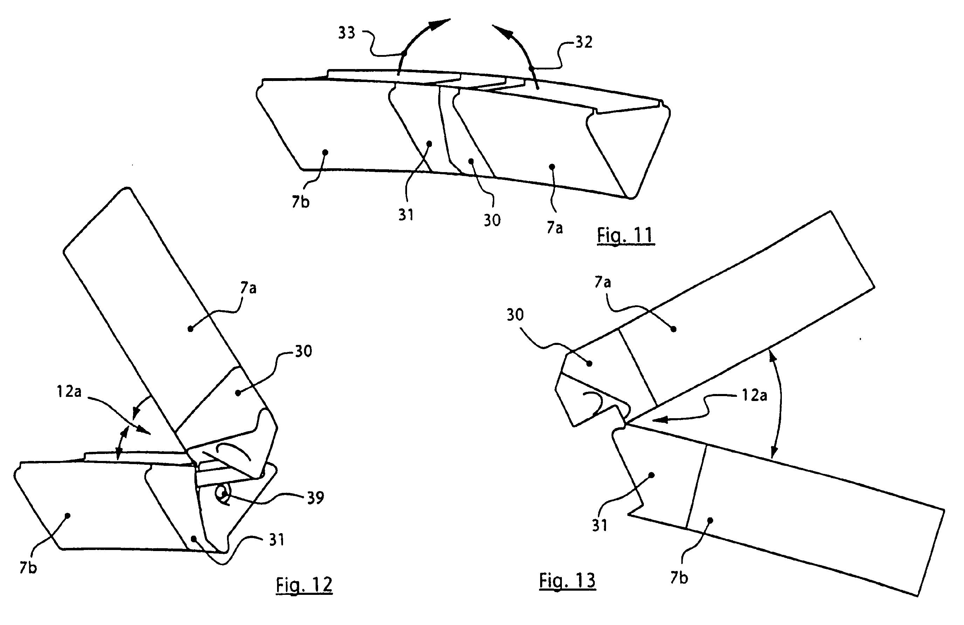

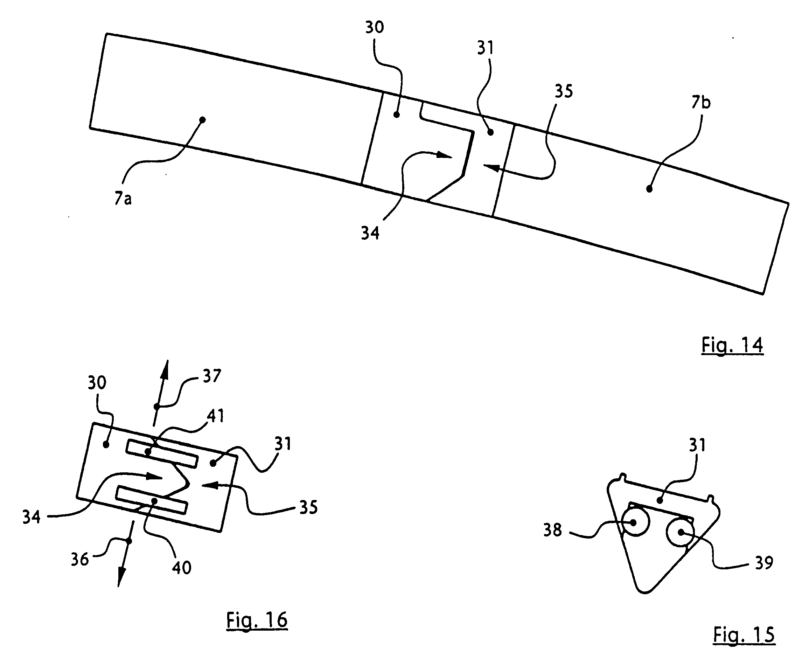

In den Gelenkbereichen 12a,13a,14a,15a,12b,13b,14b,15b,12c,13c,14c,15c weisen die Längsträger 7,8 sowie die äußeren Rahmenabstützungen 5,6 jeweils eine bei geschlossenem Dach einen formschlüssigen Eingriff der Teile sichernde Ausbildung auf, die in den Figuren 9 bis 16 für das Gelenk 12a beschrieben und mit den entsprechenden Bezugszeichen versehen ist. Die Ausbildung ist bei den anderen genannten Gelenken entsprechend.

Die Trägerteile (Trägerabschnitte) 7a,7b, die am Gelenk 12a aneinanderstoßen, sind im Gelenkbereich jeweils mit Verbindungsstücken 30,31 versehen, wobei die Verbindungsstücke eine besonders große Härte und Verschleißfestigkeit aufweisen und beispielsweise aus einem Metall gebildet sind. Figur 9 zeigt eine Seitenansicht der Teile 7a,7b des Längsträgers 7, die in Richtung der Pfeile 32,33 nach oben hin gegeneinander öffnen können.

Um die formschlüssige Abstützung in alle Richtungen der Teile 30,31 sicherstellen zu können, sind diese über ihren Querschnittsverlauf nicht gleichmäßig ausgebildet, sondern zeigen, wie in dem Schnitt XVI-XVI sichtbar ist, als Grundausbildung eine herausragende Pfeilspitze 34 bzw. eine einwärts zeigende Pfeilspitze 35, wodurch auch Kräfte in Seitwärtsrichtung (Pfeile 36, 37) abgefangen werden können. Zudem sind im wesentlichen axiale Ausnehmungen 38,39 in dem Verbindungsstück 31 vorgesehen, in das entsprechende Stifte 40,41 des Verbindungsstücks 30 eingreifen und somit in Verbindungsstellung die Abschnitte 7a,7b in nahezu unverrückbarer Weise aneinander festlegen, wodurch die einzelnen Träger 7,8 bzw. die äußeren Rahmenabstützungen 5,6 insgesamt jeweils eine Starrheit nahezu wie bei durchgehenden, ungeteilten Trägern aufweisen. Diese Starrheit wird lediglich beim Einfalten um die jeweiligen Gelenkachsen durchbrochen.

Damit ist eine hohe mechanische Stabilität auch des flexiblen Dachbereiches 4 gesichert. Auch bei Überfahren von Fahrbahnunebenheiten ergeben sich keine Klappergeräusche oder Schwingungen der Teile gegeneinander. Die Träger 7,8 können bei geschlossenem Dach 2 zusätzlich eine Druckvorspannung der Teile 7a,7b,7c,7d bzw. 8a,8b,8c,8d gegeneinander aufweisen, ebenso die randseitigen Rahmenabstützungen 5,6. Dadurch ist die Stabilität zusätzlich vergrößert und eine gleichmäßige und durchgehende Wölbung des Dachbezuges, der von den Trägern 7,8 untergriffen ist, erreicht.

Zur zusätzlichen Aussteifung können noch einzelne Querträger, etwa 10,11 zwischen Teilabschnitten, beispielsweise 7b und 8b bzw. 7c und 8c, angeordnet und jeweils an diesen Teilabschnitten 7b,8b,7c,8c festgelegt sein. Diese Querträger 10,11 laufen dann dicht unter der von dem Dachbezug bespannten Oberfläche und sind daher von außen nicht sichtbar.

Nach innen hin kann das flexible Dach bzw. der flexible Dachbereich 4 von einem sogenannten Innenhimmel untergriffen sein, so daß weder die Träger 7,8 noch die Querträger 10,11 oder die Rahmenabstützungen 5,6 vom Innenraum aus sichtbar sind.

Die Träger 7,8 und die seitlichen Rahmenabstützungen 5,6 sind im gezeigten Ausführungsbeispiel bezüglich Material und Teilungen aufeinander abgestimmt und wirken während des Dachöffnens oder -schließens gleichartig.

## Patentansprüche

1. Cabriolet-Fahrzeug (1) mit einem beweglichen Dach (2), das zumindest bereichsweise (4) flexibel ausgebildet ist, wobei der flexible Dachbereich (4) einen über zumindest bereichsweise starre Träger (7;8) zwischen randseitigen Rahmenabstützungen (5;6) gespannten Dachbezug aufweist, **dadurch gekennzeichnet, daß** die Träger (7;8) in Längsrichtung des Fahrzeugs verlaufen, daß die Träger (7;8) jeweils zumindest ein Gelenk (12a,12b, 12c;13a,13b,13c) umfassen, an dem die Träger (7;8) geteilt sind und um dessen Gelenkachse die Träger (7;8) mit dem darauf gespannten Bezug einfaltbar sind.

2. Cabriolet-Fahrzeug nach Anspruch 1, **dadurch gekennzeichnet, daß** eine ungerade Zahl von Trägern (7;8) vorgesehen ist und ein Träger in einer vertikalen Fahrzeuglängsmittelebene liegt.

3. Cabriolet-Fahrzeug nach einem der Ansprüche 1 oder 2, **dadurch gekennzeichnet, daß** jedem Träger (7;8) und den randseitigen Rahmenabstützungen (5;6) jeweils mehrere Gelenke (12a,12b,12c;13a,13b,13c;14a,14b,14c;15a, 15b,15c) zugeordnet sind und der hierüber gespannte Dachbezug nach Art eines Rolldaches entgegen der Fahrtrichtung (F) geöffnet werden kann.

4. Cabriolet-Fahrzeug nach einem der Ansprüche 1 bis 3, **dadurch gekennzeichnet, daß** dieses ein starres rückwärtiges Dachteil (3) aufweist und die Träger (7;8) sowie die randseitigen Rahmenabstützungen (5;6) sich zwischen einem Windschutzscheibenrahmen (9) und einer oberen Kante des starren Dachteils (3) erstrecken.

5. Cabriolet-Fahrzeug nach Anspruch 4, **dadurch gekennzeichnet, daß** in Öffnungsstellung des Daches (2) die Träger (7;8) mit dem darauf abgestützten Bezug auf dem starren Dachteil (3) ablegbar sind.

6. Cabriolet-Fahrzeug nach einem der Ansprüche 1 bis 5, **dadurch gekennzeichnet, daß** die Träger (7;8) an ihren die Teile (7a,7b,7c;8a,8b,8c) verbindenden Gelenken (12a,12b,12c;13a,13b,13c) mit formschlüssig ineinandergreifenden Zentrierhilfen (30;31;39;40) versehen sind.

7. Cabriolet-Fahrzeug nach Anspruch 6, **dadurch gekennzeichnet, daß** die Zentrierhilfen (30;31;39;40) in Verbindungsstellung formschlüssige Verbindungen eingehen, die die Teile der Träger in mehrere Richtungen gegeneinander sichern.

8. Cabriolet-Fahrzeug nach einem der Ansprüche 6 oder 7, **dadurch gekennzeichnet, daß** die Träger (7;8) eine dreiecksförmige Querschnittsgestalt haben und die Zentrierhilfen (30;31;39;40) bezüglich aller Richtungen der Dreieckskanten wirksam sind.

9. Cabriolet-Fahrzeug nach einem der Ansprüche 1 bis 8, **dadurch gekennzeichnet, daß** das Cabriolet-Fahrzeug (1) eine rückwärtige Sitzreihe (22) aufweist und in Offenstellung des Daches (2) dieses im Bereich der rückwärtigen Sitzreihe (22) abgelegt ist.

10. Cabriolet-Fahrzeug nach Anspruch 9, **dadurch gekennzeichnet, daß** die Sitzlehne(n) (23) der rückwärtigen Sitzreihe (22) in Fahrzeuglängsrichtung verlagerbar ist oder sind und sich in geschlossener Stellung des Daches in einer hinteren und in geöffneter Stellung des Daches in einer vorderen Extremalstellung befindet oder befinden.

## Claims

1. A cabriolet vehicle (1) with a movable roof (2) which is flexibly formed at least in areas (4), whereby the flexible roof area (4) has a roof covering which is stretched over beams (7;8) which are between edge-side frame supports (5;6) and which are rigid at least in areas, **characterised in that** the beams (7;8) run in the longitudinal direction of the vehicle, **in that** the beams (7;8) each include at least one hinge (12a,12b,12c;13a,13b,13c) at which the beams (7;8) are divided and around the hinge axle of which the beams (7;8) can be folded in with the covering which is stretched upon them.

2. The cabriolet vehicle according to Claim 1, **characterised in that** an odd number of beams (7;8) is provided and a beam is situated in a vertical longitudinal midplane of the vehicle.

3. The cabriolet vehicle according to one of Claims 1 or 2, **characterised in that** several hinges (12a,12b,12c;13a,13b,13c;14a,14b,14c;15a,15b,15c) are assigned to each beam (7;8) and to the edge frame supports (5;6) and the roof covering stretched over these can be opened against the direction of travel (F) in the manner of a roller roof.

4. The cabriolet vehicle according to one of Claims 1 to 3, **characterised in that** it has a rigid rear roof part (3) and **in that** the beams (7;8) and the edge-side frame supports (5;6) extend between a windscreen frame (9) and an upper rim of the rigid roof part (3).

5. The cabriolet vehicle according to Claim 4, **characterised in that**, in the opening position of the roof (2), the beams (7;8), with the covering supported on them, are able to be stored on the rigid roof part (3).

6. The cabriolet vehicle according to one of Claims 1 to 5, **characterised in that** the beams (7;8) are provided, at their hinges (12a,12b,12c;13a,13b,13c) which connect the parts (7a,7b,7c;8a,8b,8c), with centring aids (30;31 ;39;40) which engage each other in a form-fitting manner.

7. The cabriolet vehicle according to Claim 6, **characterised in that** the centring aids (30;31 ;39;40), in the connection position, enter into form-fitting connections which secure the parts of the beams against each other in several directions.

8. The cabriolet vehicle according to one of Claims 6 or 7, **characterised in that** the beams (7;8) have a triangular cross-sectional shape and the centring aids (30;31 ;39;40) are effective in respect of all directions of the triangle rims.

9. The cabriolet vehicle according to one of Claims 1 to 8, **characterised in that** the cabriolet vehicle (1) has a rear seat row (22) and **in that**, in the open position of the roof (2), this is stored in the area of the rear seat row (22).

10. The cabriolet vehicle according to Claim 9, **characterised in that** the seat backrest(s) (23) of the rear seat row (22) is or are able to be shifted in the vehicle longitudinal direction and, in the closed position of the roof, is or are located in a back extremal position and, in the open position of the roof, is or are located in a front extremal position.

## Revendications

1. Véhicule cabriolet (1) avec un toit mobile (2), lequel est formé au moins en zones flexibles (4), la zone de toit flexible (4) présentant un revêtement de toit tendu sur des supports (7 ; 8) rigides dans au moins des zones entre des appuis formant cadres (5 ; 6) au niveau de bords latéraux, **caractérisé en ce que** les supports (7 ; 8) se prolongent dans le sens de la longueur du véhicule, **en ce que** les supports (7 ; 8) comprennent chacun au moins une articulation (12a, 12b, 12c ; 13a, 13b, 13c), au niveau de laquelle les supports (7 ; 8) sont divisés et des axes articulés de laquelle les supports (7 ; 8) peuvent plier avec le revêtement tendu par-dessus.

2. Véhicule cabriolet selon la revendication 1, **caractérisé en ce qu'**un nombre impair de supports (7 ; 8) est fourni et un support repose dans un plan central longitudinal vertical du véhicule.

3. Véhicule cabriolet selon l'une des revendications 1 ou 2, **caractérisé en ce que** chaque support (7 ; 8) et les appuis formant cadres au niveau de bords latéraux (5 ; 6) sont chacun associés à plusieurs articulations (12a, 12b, 12c ; 13a, 13b, 13c ; 14a, 14b, 14c ; 15a, 15b, 15c) et de ce fait la zone de toit flexible peut s'ouvrir à la manière d'un toit roulant dans le sens contraire de la marche (F).

4. Véhicule cabriolet selon l'une des revendications 1 à 3, **caractérisé en ce que** celui-ci présente une partie formant toit arrière rigide (3) et les supports (7 ; 8) ainsi que les appuis formant cadres au niveau de bords latéraux (5 ; 6) s'étendent entre un cadre de pare-brise (9) et une face supérieure de la partie formant toit rigide (3).

5. Véhicule cabriolet selon la revendication 4, **caractérisé en ce que,** en position d'ouverture du toit (2), les supports (7 ; 8) peuvent se ranger avec le revêtement en appui sur ceux-ci sur la partie formant toit rigide (3).

6. Véhicule cabriolet selon l'une des revendications 1 à 5, **caractérisé en ce que** les supports (7 ; 8) sont pourvus, au niveau de leurs articulations (12a, 12b, 12c ; 13a, 13b, 13c) connectant les parties (7a, 7b, 7c ; 8a, 8b, 8c) d'aides de centrage s'engrenant les unes dans les autres (30 ; 31 ; 39 ; 40) par emboîtement.

7. Véhicule cabriolet selon la revendication 6, **caractérisé en ce que** les aides de centrage (30 ; 31 ; 39 ; 40) comprennent des raccords emboîtés en position de raccord, lesquels consolident les parties des supports l'une contre l'autre dans plusieurs directions.

8. Véhicule cabriolet selon l'une des revendications 6 ou 7, **caractérisé en ce que** les supports (7 ; 8) ont une configuration de coupe transversale en forme de triangle et les aides de centrage (30 ; 31 ; 39 ; 40) sont efficaces en ce qui concerne toutes les directions des faces du triangle.

9. Véhicule cabriolet selon l'une des revendications 1 à 8, **caractérisé en ce que** le véhicule cabriolet (1) présente une rangée de sièges arrière (22) et, en position d'ouverture du toit (2), celui-ci est rangé dans la zone de la rangée de sièges arrière (22).

10. Véhicule cabriolet selon la revendication 9, **caractérisé en ce que** le ou les dossiers de sièges (23) de la rangée de sièges arrière (22) peut ou peuvent être déplacés dans le sens de la longueur du véhicule et se trouve ou se trouvent dans une position extrême arrière en position fermée du toit et dans une position extrême avant en position ouverte du toit.
